# EUROPEAN PATENT APPLICATION

(11) **EP 2 258 551 A1**
(43) Date of publication of application: **08.12.2010**
(21) Application number: 09726266.1
(22) Date of filing: 03.03.2009
(51) Int. Cl.: B32B 27/36, B32B 27/40, G02B 1/04

(54) **MULTILAYER POLYESTER FILM FOR OPTICAL USE**

(30) Priority: 22.03.2008 JP 2008074770
(71) Applicant: Mitsubishi Plastics, Inc., Tokyo 103-0021 (JP)
(72) Inventor: MASUDA, Narihiro, Maibara-shi Shiga 521-0234 (JP); KODA, Toshihiro, Maibara-shi Shiga 521-0234 (JP); FUJITA, Masato, Maibara-shi Shiga 521-0234 (JP)
(74) Representative: Merkle, Gebhard
(86) International application number: PCT/JP2009/000954
(87) International publication number: WO 2009/119011

(57) **Abstract**

The present invention provides an optical laminated polyester film which can exhibit a good adhesion to a light diffusion plate, a prism layer and a hard coat layer as well as an excellent antistatic property without deterioration in transparency. The present invention relates to an optical biaxially oriented polyester film comprising a polyester film, a coating layer comprising a cationic polymer which is formed on one surface of the polyester film, and a layer formed on the other surface of the polyester film which is obtained by applying thereonto a coating agent comprising a polyurethane comprising a diol component having a polycarbonate structure, and a heat-crosslinking agent.

## Description

### TECHNICAL FIELD

The present invention relates to an optical laminated polyester film which is suitably used in the applications of liquid crystal displays.

### BACKGROUND ART

In recent years, liquid crystal display devices have been rapidly spread and increased in number and volume of production and sales thereof. The liquid crystal display devices are generally constructed from two units including a backlight unit serving for converging light emitted from a light source to a visible side thereof and having a function of forming a uniform surface light source, and a liquid crystal cell layer unit serving for controlling a voltage applied to every display pixel to allow the respective display pixels to display each of a red color light, a green color light and a blue color light in well-controlled light amounts.

Among these units, the backlight unit is constituted from a cold cathode tube light source using a fluorescence having luminescent characteristics in wavelength ranges of red color light, green color light and blue color light which is disposed on a side face thereof when viewed from a visible side of the display device, a light guide plate having a function of efficiently introducing the light to the visible side, a diffusion plate having a function of uniformly dispersing the light introduced on the visible side in a in-plane direction, and a prism sheet having a function of enhancing a luminance of the display device by converging the light oriented to the side face of the display device toward the visible side of the display device.

In ordinary liquid crystal displays, the backlight unit includes a light guide plate, a diffusion plate usually called a lower diffusion plate which is disposed on the light guide plate, two prism sheets disposed on the lower diffusion plate such that light converging directions of the prism sheets are oriented in the longitudinal-to-transverse direction and right-to-left direction, respectively, and a diffusion sheet usually called an upper diffusion plate which is disposed on the two prism sheets. In addition to the above construction, the backlight unit has been constituted from a variety of combinations of prism sheets and diffusion plates, for example, for the purposes of further enhancing a light converging property or a light diffusion property, reducing a thickness of the backlight unit by decreasing the number of the prism sheets or the diffusion plates used therein, or contemplating reduction in production costs.

For example, in the above illustrated construction in which the two prism sheets are superimposed on each other, one of the prism sheets is contacted at its rear surface with the other prism layer (sheet) having a triangular prism shape. In order to prevent occurrence of flaws on these prism sheets upon fitting the prism sheets to liquid crystal displays or upon handling these films, there has been proposed the method of forming a hard coat layer on the rear surface of the prism sheet in order to impart a scratch resistance thereto (Patent Document 1).

Meanwhile, in the case of optical functional films such as hard coat films, diffusion plates and prism sheets, for the purpose of preventing these films from suffering from flaws or stains, the films are usually protected by attaching a polyolefin-based film (such as a polyethylene film and an EVA film) thereto. The protective film is released from the respective optical functional films upon use. However, when releasing the protective film, release-charging tends to frequently occur, and the amount of electrostatic charge generated thereupon tends to sometimes become extremely large, which results in not only poor working efficiency, but also such a possibility that foreign matters are included in the backlight unit owing to attraction of dirt and dusts thereto.

On the other hand, as the method of imparting an antistatic property to the optical functional films such as hard coat films, diffusion plates and prism sheets, there have been conventionally proposed several methods, for example, the method of providing a light diffusion plate having a transparent conductive layer produced from a metal oxide between a transparent substrate and a light diffusion layer (Patent Document 2), or the method of providing a conductive layer to which conductive particles are added, etc., between the hard coat layer described in the above Patent Document 1 and a transparent base material film.

However, in these conventional antistatic methods, the transparent conductive layer tends to inevitably suffer from deterioration in light transmittance, and no measure concerning adhesion between the base material film and the prism layer, the hard coat layer or the light diffusion layer has been taken into consideration.
Patent Document 1: Japanese Patent Application Laid-Open (KOKAI) No. 11-326607
Patent Document 2: Japanese Patent Application Laid-Open (KOKAI) No. 5-333202

### DISCLOSURE OF THE INVENTION

### Problems to be Solved by the Invention

The present invention has been accomplished to solve the above problems. An object of the present invention is to provide an optical laminated polyester film which can be suitably used as an optical functional film such as a diffusion plate and a prism sheet as a constitutional component of a backlight for liquid crystal displays. More specifically, the present invention aims at providing an optical laminated polyester film which can exhibit a good adhesion to a light diffusion plate, a prism sheet or a hard coat layer as well as an excellent antistatic property without deterioration in transparency.

### Means for Solving Problems

As a result of the present inventors' earnest study, it has been found that the above problems can be solved by using a laminated polyester film having a specific construction. The present invention has been attained on the basis of this finding.

That is, according to an aspect of the present invention, there is provided an optical biaxially oriented polyester film comprising a polyester film, a coating layer comprising a cationic polymer which is formed on one surface of the polyester film, and a layer formed on the other surface of the polyester film which is obtained by applying thereonto a coating agent comprising a polyurethane comprising a diol component having a polycarbonate structure, and a heat-crosslinking agent.

### EFFECT OF THE INVENTION

The optical laminated polyester film of the present invention is excellent in adhesion to a hard coat layer, a light diffusion layer and a prism layer which are to be formed on one surface thereof, and exhibits a good transparency, and further is provided on the other surface thereof with an antistatic easy-bonding layer. For this reason, since the hard coat layer or the light diffusion layer formed on the laminated polyester film exhibits a low surface resistivity value, a protective EVA sheet attached thereto can be released without generating substantially no electrostatic charge. Therefore, the present invention has a very high industrial value.

### PREFERRED EMBODIMENTS FOR CARRYING OUT THE INVENTION

The present invention is described in detail below.
In the optical laminated polyester film of the present invention, as the constitutional component of the polyester, there may be used aromatic polyesters such as polyethylene terephthalate and polyethylene 2,6-naphthalate, or copolymers comprising these constitutional resin components as a main component.

When the copolyester is used as the polyester, the content of the third component in the copolyester is preferably not more than 10 mol%. The dicarboxylic acid component of the copolyester may be one or more compounds selected from the group consisting of isophthalic acid, phthalic acid, terephthalic acid, 2,6-naphthalenedicarboxylic acid, 1,4-cyclohexanedicarboxylic acid, adipic acid and sebacic acid, etc. The glycol component of the copolyester may be one or more compounds selected from the group consisting of ethylene glycol, diethylene glycol, propylene glycol, butanediol, 1,4-cyclohexane dimethanol, neopentyl glycol and ethyleneoxide adducts of bisphenol A, etc. Meanwhile, when the content of the third comonomer component used in the copolyester is more than 10 mol%, the resulting film tends to suffer from remarkable deterioration in heat resistance, mechanical strength, solvent resistance, etc.

Among the films comprising the above polyesters, the films obtained from the polyesters comprising polyethylene terephthalate as the constitutional component or copolyesters thereof are preferred because of good balance between properties as a base material film and production costs.

Meanwhile, the above polyesters may be produced by conventionally known methods, for example, by the method in which a dicarboxylic acid and a diol are directly reacted with each other to obtain a polyester having a low polymerization degree, or the method in which a lower alkyl ester of a dicarboxylic acid is reacted with a diol in the presence of a conventionally known transesterification catalyst and then the resulting reaction product is polymerized in the presence of a polymerization catalyst. Examples of the polymerization catalyst include known catalysts such as an antimony compound, a germanium compound, a titanium compound, an aluminum compound and an iron compound. However, there may also be suitably used such a method in which the amount of the antimony compound is limited to zero or not more than 100 ppm to prevent occurrence of fogging in the resulting film. The polymerization may be performed by using such a method in which the respective components are polymerized in a molten state until reaching a desired polymerization degree, or by using the above method in combination with a solid state polymerization method. In particular, in order to reduce an amount of oligomers in the polyester, the solid state polymerization is preferably used in combination.

The inherent viscosity of the polyester used in the polyester film is preferably 0.40 to 0.90 dL/g and more preferably 0.45 to 0.85 dL/g. When the inherent viscosity of the polyester is too low, the resulting film tends to be deteriorated in mechanical strength. Whereas, when the inherent viscosity of the polyester is too high, a melt-extrusion step upon formation of the film tends to undergo an excessively large load and therefore tends to be deteriorated in productivity.

The optical laminated polyester film of the present invention may be in the form of a laminated film comprising two or more layers which are co-extruded and laminated on each other. The film comprising three or more layers, is constituted from two outermost surface layers and an intermediate layer which may have a laminated structure by itself. The thickness of each of the two outermost surface layers is usually not less than 2 µm and preferably not less than 5 µm, and on the other hand, is usually not more than 1/4 and preferably not more than 1/10 of a total thickness of the resulting film.

In the optical laminated polyester film of the present invention, inorganic fine particles or organic fine particles may be added thereto, or deposited therein in order to ensure a good slip property required as a film and prevent occurrence of flaws during the production process. The fine particles added to the polyester film are not particularly limited. Examples of the fine particles include inorganic fine particles such as silicon oxide, calcium carbonate, magnesium carbonate, calcium phosphate, magnesium phosphate, kaolin and alumina, and crosslinked polymer fine particles such as crosslinked acrylic resins and crosslinked polystyrene resins. Among these fine particles, amorphous silica particles are preferably used because they exhibit a refractive index relatively close to that of the polyesters and less formation of voids in the optical laminated polyester film, which are required to obtain a film having a high transparency. These fine particles usually have an average particle diameter of 0.02 to 5 µm, and may be used alone or in combination of any two or more kinds thereof. The amount of the fine particles added to the polyester is usually in the range of 0.0005 to 1.0% by weight.

These fine particles may be added to an entire part of the polyester film when the film has a single layer structure. When the polyester film has a three or more layer structure, it is preferred that the fine particles be added not to an intermediate layer but to only both surface layers in order to maintain a good transparency of the polyester film and further readily ensure a good slip property thereof. In particular, when the thickness of the polyester film is large (for example, not less than 100 µm), it is effective to add the fine particles only to the both surface layers.

In addition, in order to prevent oligomers in the polyester film from being precipitated or forming feign matters on the surface of the film, and from causing deterioration in transparency of the film, there may be used the polyester whose oligomer content is reduced. As the polyester having a less oligomer content, there may be employed polyesters obtained by using the polymerization method in combination with the solid state polymerization as described above, polyesters obtained by a hot water treatment or a water vapor treatment, etc. The polyester having a less oligomer content may be used to form an entire part of the film when the film has a single layer structure, or may be used to form only both the surface layers when the film has a multi-layer structure.

Further, the optical laminated polyester film of the present invention may also comprise, in addition to the above fine particles, conventionally known additives such as an antioxidant, a thermal stabilizer, a lubricant, a fluorescent brightener, a dye and a pigment, if required. These additives are preferably added to the intermediate layer of the polyester film having a three or more layer structure in order to prevent the additives from being precipitated on the surface of the film.

The thickness of the optical laminated polyester film of the present invention is not particularly limited, but is usually 50 to 350 µm and preferably 75 to 250 µm for the purpose of using the resulting film as a film for diffusion plates.

One of the features of the optical laminated polyester film of the present invention resides in that a coating layer comprising a cationic polymer (hereinafter occasionally referred to merely as a "first layer") is formed on one surface of the film. The coating layer exhibits an antistatic property and an easy-bonding property.

In the present invention, the cationic polymer is used as an antistatic agent in the first layer. When the antistatic agent is a low molecular weight compound, there tends to arise such a problem that the low-molecular weight antistatic agent is precipitated on the surface of the film and transferred to the surface of a film portion overlapped thereon, for example, when the film is wound up into a roll, etc. Among the high-molecular weight antistatic agents, the use of nonionic polymers is generally undesirable owing to poor antistatic performance thereof. Also, the use of the antistatic agents formed of anionic polymers is undesirable because they are strong acids such as, for example, polystyrenesulfonic acid and therefore difficult to handle, and further neutralized salts thereof tend to cause whitening of a coating film when coated or stretched by the below-mentioned in-line coating method. On the contrary, the cationic polymers are relatively excellent in antistatic performance, exhibit a good handling property, and are free from whitening upon stretching. Therefore, in the present invention, the cationic polymers are preferably used as the antistatic agent.

The cationic polymers suitably used in the present invention are preferably in the form of a polymer comprising a unit having a quaternarized nitrogen as a repeating unit. In particular, the cationic polymers preferably comprise a unit having a pyrrolidinium ring in a main chain thereof which is represented by the following formula (I) or (II) as a main repeating unit in view of attaining an excellent antistatic performance. In addition, the use of these cationic polymers is advantageous, because even though the amount of the cationic polymers blended in the antistatic easy-bonding layer is reduced, the antistatic performance as a whole is less deteriorated so that the amount of an adhesive component blended therein can be increased instead to enhance an adhesion property of the coating layer.

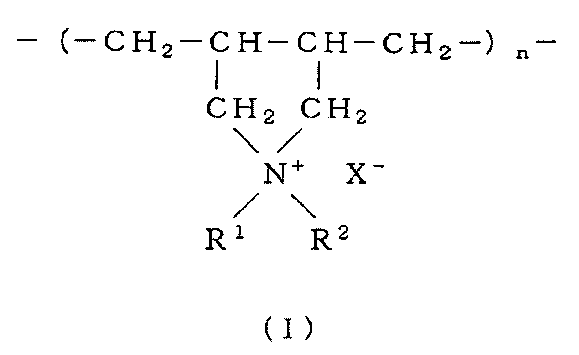

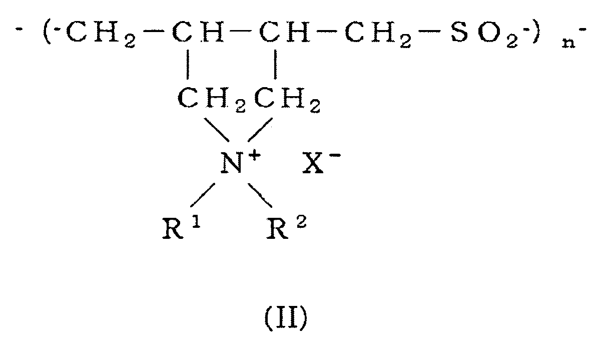

In the structure represented by the formula (I) or (II), R¹ and R² are each preferably an alkyl group having 1 to 4 carbon atoms or hydrogen, and these groups may be the same or different from each other. Also, the alkyl group as R¹ and R² may be substituted with a hydroxyl group, an amide group, an amino group or an ether group. Further, R¹ and R² may be chemically bonded to each other to form a ring structure. In addition, X⁻ in the formula (I) or (II) is a halogen ion, a nitric acid ion, a methanesulfonic acid ion, an ethanesulfonic acid ion, a monomethylsulfuric acid ion, a monoethylsulfuric acid ion, a trifluoroacetic acid ion or a trichloroacetic acid ion.

Among the cationic polymers comprising the unit having a pyrrolidinium ring in a main chain thereof as a main repeating unit, those cationic polymers of the formula (I) in which X⁻ is a chlorine ion are preferred because they are excellent in antistatic performance, and at the same time, exhibit a less humidity dependency of the antistatic performance and therefore a less deterioration in antistatic performance even under a low humidity condition. Furthermore, even when no halogen ion is usable in the antistatic easy-bonding layer, the methanesulfonic acid ion or the monomethylsulfuric acid ion may be used instead of the chlorine ion, so that the antistatic performance close to that using the chlorine ion can be attained.

The polymer having the unit of the formula (I) as a repeating unit may be produced by polymerizing a diallyl ammonium salt as a monomer represented by the following formula (III) in a medium comprising water as a main component while subjecting the monomer to ring-closing reaction by a radical polymerization method. Also, the polymer having the unit of the formula (II) as a repeating unit may be produced by subjecting the monomer of the formula (III) to ring-closing reaction in a reaction system using sulfur dioxide as a medium.

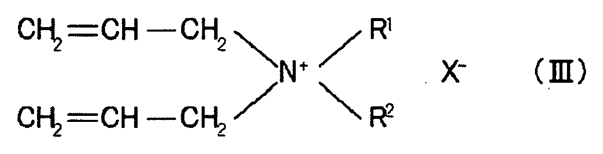

The polymer having the unit of the formula (I) or (II) as a repeating unit is preferably in the form of a homopolymer constituted from a single unit because of a higher antistatic performance thereof. However, as described hereinafter, in the case where a coating solution comprising the cationic polymer is applied onto a polyester film and then the thus coated polyester film is stretched, in order to improve a transparency of the coating layer, 0.1 to 50 mol% of the unit represented by the formula(I) or (II) may be substituted with the other copolymerizable component.

The monomer component used as the copolymerizable component may be one or more compounds selected from those compounds having a carbon-to-carbon unsaturated bond which is copolymerizable with the diallyl ammonium salt of the formula (III).

Specific examples of the above compounds include acrylic acid and salts thereof, methacrylic acid and salts thereof, methyl (meth)acrylate, ethyl (meth)acrylate, propyl (meth)acrylate, butyl (meth)acrylate, (meth)acrylamide, N-methylol (meth)acrylamide, N-methyl (meth)acrylamide, N,N-dimethyl (meth)acrylamide, maleic acid and salts thereof or maleic anhydride, fumaric acid and salts thereof or fumaric anhydride, monoallyl amines and quaternarized products thereof, acrylonitrile, vinyl acetate, styrene, vinyl chloride, vinylidene chloride, hydroxyethyl (meth)acrylate, hydroxypropyl (meth)acrylate, dihydroxypropyl (meth)acrylate, glycidyl (meth)acrylate, (meth)acryloyloxyethyl dialkyl amines and quaternarized products thereof, (meth)acryloyloxypropyl dialkyl amines and quaternarized products thereof, (meth)acryloylaminoethyl dialkyl amines and quaternarized products thereof, and (meth)acryloylaminopropyl dialkyl amines and quaternarized products thereof, although not particularly limited thereto.

As the cationic polymer in the antistatic easy-bonding layer used in the present invention, a cationic polymer comprising, for example, a unit represented by the following formula (IV) or (V) as a repeating unit may also be used in place of the above cationic polymer comprising a unit having a pyrrolidinium ring in a main chain thereof which is represented by the above formula (I) or (II) as a repeating unit.

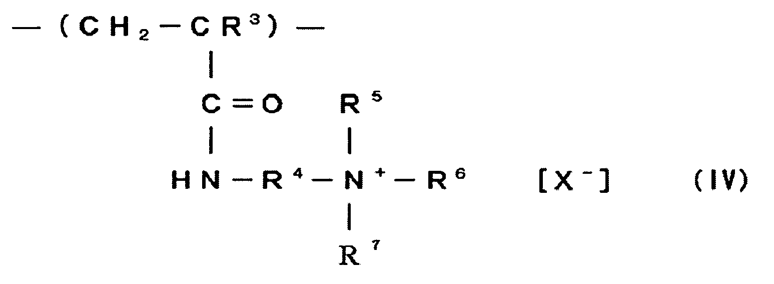

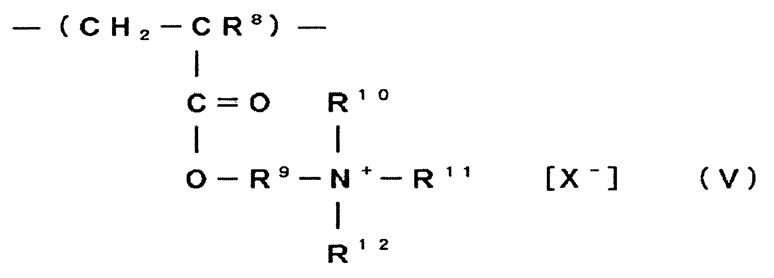

In the structure of the formula (IV) or (V), R³ and R⁸ are each preferably hydrogen or a methyl group; R⁴ and R⁹ are each preferably an alkyl group having 2 to 6 carbon atoms; R⁵, R⁶, R⁷, R¹⁰, R¹¹ and R¹² are each a methyl group, a hydroxyethyl group or hydrogen, and these groups may be respectively the same or different from each other. In addition, X⁻ in the formula (IV) or (V) is a halogen ion, a nitric acid ion, a methanesulfonic acid ion, an ethanesulfonic acid ion, a monomethylsulfuric acid ion, a monethylsulfuric acid ion, a trifluoroacetic acid ion or a trichloroacetic acid ion.

The cationic polymer comprising the unit represented by the formula (IV) or (V) as a repeating unit may be produced, for example, by subjecting an acrylic acid monomer or a methacrylic acid monomer corresponding to the respective units to radical polymerization in a medium comprising water as a main component, although not particularly limited thereto.

The average molecular weight (number-average molecular weight) of the cationic polymer used in the present invention is usually in the range of 1000 to 500000 and preferably 5000 to 100000. When the average molecular weight of the cationic polymer is less than 1000, the resulting film tends to suffer from transfer of the cationic polymer to a surface portion of the film overlapped on the other portion thereof, or tends to cause blocking, etc. On the other hand, when the average molecular weight of the cationic polymer is more than 500000, a coating solution comprising such a cationic polymer tends to have an excessively high viscosity so that it may be difficult to uniformly coat the surface of the film with such a coating solution.

In the optical laminated polyester film of the present invention, in order to enhance adhesion of the coating layer comprising the cationic polymer to the optical functional layers such as the hard coat layer, the light diffusion layer and the prism layer which are formed on the coating layer, or improve close contact between the coating layer and the polyester film as a base material, a binder polymer is preferably added to the first layer. Examples of the binder polymer include polyesters, polyacrylates and polyurethanes. These polymers may be rendered water-soluble or water-dispersible by copolymerizing a nonionic, cationic or amphoteric hydrophilic component as one component of monomers therewith. In addition, the above polymers may be dispersed in water by forcibly emulsifying them using a nonionic, cationic or amphoteric surfactant, or may be formed into a water dispersion by subjecting them to emulsion polymerization using a nonionic, cationic or amphoteric surfactant. Further, these polymers may be used in the form of a copolymer. The copolymer may be either a random copolymer, a block copolymer or a graft copolymer. Also, these polymers may be bonded to different kinds of polymers. As the different kinds of polymers, there may be used, for example, urethane-grafted polyacrylates, polyester-grafted polyacrylates or the like which are obtained by subjecting an acrylic monomer to emulsion polymerization in the presence of an aqueous solution or a water dispersion of a polyurethane or a polyester, although not particularly limited thereto.

In the optical laminated polyester film of the present invention, for the purpose of enhancing a heat resistance, an adhesion property, a solvent resistance and an anti-blocking property of the resulting coating film, a crosslinking agent may be added to the first layer. The crosslinking agent preferably comprises at least one compound selected from the group consisting of methylolated or alkoxymethylolated melamine-based compounds and benzoguanamine-based compounds, urea-based compounds; acrylamide-based compounds, epoxy-based compounds, isocyanate-based compounds, carbodiimide-based compounds, oxazoline-based compounds, silane coupling agent-based compounds and titanium coupling agent-based compounds.

In the optical laminated polyester film of the present invention, for the purpose of impart a good slip property to the surface of the coating layer and enhancing an anti-blocking property thereof, inorganic or organic fine particles may be added to the first layer. The fine particles are preferably at least one kind of fine particles selected from the group consisting of fine particles of silicon oxide, alumina, crosslinked acrylic resins, crosslinked polystyrene resins, etc., and conductive fine particles such as tin oxide fine particles, indium-tin composite oxide fine particles and antimony-tin composite oxide fine particles. The average particle diameter of the fine particles added is preferably not more than 100 nm, and the amount of the fine particles added to the antistatic easy-bonding layer is preferably not more than 10% by weight.

In the optical laminated polyester film of the present invention, a surfactant may be added to the antistatic easy-bonding layer comprising the cationic polymer. As the surfactant, there may be suitably used nonionic surfactants such as alkyleneoxide adducts of acetylene glycol for the purpose of improving a wettability of the coating solution. In addition, for the purpose of maintaining a good transparency of the coating layer during the step of stretching the coating layer together with the base film, there may also be suitably used alkyleneoxide adducts of glycerol, polyalkyleneoxide adducts of polyglycerol, etc.

In the optical laminated polyester film of the present invention, the composition constituting the antistatic easy-bonding layer comprising the cationic polymer, that is, the amounts and proportions of the cationic polymer, the binder, the crosslinking agent, the fine particles and the surfactant, are not particularly limited, because optimum values thereof vary depending upon the compounds selected therefor. However, in order to impart a good antistatic property to the surface of the coating layer, the content of the cationic polymer therein is usually not less than 5% and preferably 10 to 80%.

In the present invention, the surface resistivity value of the first layer is usually not more than 1 x 10¹³ Ω, preferably not more than 1 x 10¹¹ Ω and more preferably not more than 1 x 10¹⁰ Ω. The lower limit of the surface resistivity value of the first layer is usually 1 x 10⁸ Ω, although not particularly limited thereto. When the surface resistivity value of the first layer is more than 1 x 10¹³ Ω, the functional layers further laminated on the first layer such as the light diffusion layer and the hard coat layer may fail to effectively exhibit an antistatic performance.

In the present invention, the coating amount of the first layer as the finally produced coating film is preferably in the range of 0.01 to 0.5 g/m² and more preferably 0.02 to 0.3 g/m². When the coating amount of the first layer is less than 0.01 g/m², the resulting coating layer tends to be insufficient in antistatic performance and adhesion property. When the coating amount of the first layer is more than 0.5 g/m², the antistatic performance and adhesion property of the first layer is already saturated, and on the contrary, the resulting coating layer rather tends to suffer from problems such as occurrence of blocking.

In the present invention, as described hereinafter, it is required that the first layer is laminated by a so-called in-line coating method in which the coating solution using water as a main medium is applied onto the polyester film, and the thus coated polyester film is stretched in at least one direction thereof and then thermally fixed. In this case, for the purpose of enhancing a stability of the coating solution and improving coatability of the coating solution and properties of the resulting coating film, in addition to water, an organic solvent having a good compatibility with water may be added to the coating solution in an amount of usually not more than 10% by weight. Examples of the organic solvent include alcohols such as ethanol, isopropanol, ethylene glycol and glycerol; ethers such as ethyl cellosolve, t-butyl cellosolve, propylene glycol monomethyl ether and tetrahydrofuran; ketones such as acetone and methyl ethyl ketone; amines such as dimethylethanol amine and trimethanol amine; and amides such as N-methyl pyrrolidone, dimethyl formamide and dimethyl acetamide. These organic solvents may be used alone or in combination of any two or more thereof.

It is required that the optical laminated polyester film of the present invention is provided on its rear surface opposed to the surface on which the above antistatic easy-bonding first layer is laminated, with a coating layer obtained by applying a coating agent which comprises a polyurethane comprising a diol component having a polycarbonate structure and a heat-crosslinking agent (hereinafter occasionally referred to merely as a "second layer") thereonto. The second layer has an easy-bonding property.

The above polyurethane having a polycarbonate structure means those polyurethane in which polycarbonates are used as one of polyols which are main constitutional components of the polyurethane.

The polycarbonates may be produced, for example, by reacting a carbonic acid diester such as dimethyl carbonate, diethyl carbonate, diphenyl carbonate and dicyclohexyl carbonate with various diols and then polycondensing the resulting ester while conducting the transesterification reaction. Examples of the diols used above include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Therefore, the polycarbonates are in the form of a polycarbonate diol.

The number-average molecular weight of the polycarbonate diol is preferably 300 to 5000 as measured by gel permeation chromatography (GPC) in terms of polystyrene.

Examples of the polyol component other than the polycarbonates include polyethers such as polyoxyethylene glycol, polyoxypropylene glycol and polyoxytetramethylene glycol; polyesters such as polyethylene adipate, polyethylene-butylene adipate and polycaprolactone; acrylic polyols; and castor oil.

Examples of the polyisocyanate component of the polyurethane having a polycarbonate structure include hexamethylene diisocyanate, 4,4'-dicyclohexylmethane diisocyanate, isophorone diisocyanate, tolylene diisocyanate, hydrogenated tolylene diisocyanate, phenylene diisocyanate, hydrogenated phenylene diisocyanate, 4,4'-diphenylmethane diisocyanate, xylylene diisocyanate and hydrogenated xylylene diisocyanate. Among these polyisocyanates, hydrogenated aromatic diisocyanates or aliphatic diisocyanates which have no aromatic ring are preferably used in the present invention because they are free from undesirable coloration even when the polyurethanes are deteriorated owing to exposure to heat or light.

Examples of a chain extender or a crosslinking agent (which is different from the heat-crosslinking agent used in combination with the polyurethane) include ethylene glycol, propylene glycol, butanediol, diethylene glycol, trimethylol propane, hydrazine, ethylenediamine, diethylenetriamine, isophorone diamine, 4,4'-diaminodiphenylmethane, 4,4'-diaminodicyclohexylmethane and water.

The polyurethane comprising the polycarbonate as its constitutional component as used in the present invention may be dispersed or dissolved in a medium comprising water as a main component, as described hereinafter. In order to disperse or dissolve the polyurethane in water, there may be used those polyurethanes of a forcibly emulsifiable type which can be dispersed and dissolved using an emulsifier, or those polyurethanes of a self-emulsifiable type or a water-soluble type which are obtained by introducing a hydrophilic group into polyurethane resins, etc. Among these polyurethanes, in particular, self-emulsifiable type polyurethanes which are ionomerized by introducing an ionic group into a skeleton of polyurethane resins are preferred because they are excellent in storage stability of the coating solution as well as water resistance, transparency and adhesion property of the resulting coating layer. Examples of the ionic group to be introduced into the polyurethane resins include various groups such as a carboxyl group, a sulfonic acid group, a phosphoric acid group and a quaternary ammonium group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the polyurethane resins by suitably adjusting an amount of the diol charged. For example, the diol used in the polymerization for production of the urethane resin may be copolymerized with dimethylolpropionic acid, dimethylolbutanoic acid, bis-(2-hydroxyethyl)propionic acid, bis-(2-hydroxyethyl)butanoic acid, etc. In addition, the carboxyl group thus introduced is preferably formed into a salt thereof by neutralizing it with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating may be used as a crosslinking reaction site which can be reacted with other crosslinking agents. As a result of using the above-described polyurethane comprising the ionic group, the coating solution before being coated is excellent in stability, and the resulting easy-bonding layer can be further improved in durability, solvent resistance, water resistance, anti-blocking property, etc.

The content of the ionic group in the polyurethane is preferably 0.05 to 8% by weight. When the ionic group content is too small, the resulting polyurethane tends to be deteriorated in water solubility or water dispersibility. When the ionic group content is too large, the coating layer obtained after the coating tends to be deteriorated in water resistance, or may absorb a moisture therein, so that the obtained films tend to be stuck to each other.

The content of the polycarbonate component in the polyurethane is usually 20 to 95% by weight and preferably 40 to 90% by weight. When the content of the polycarbonate component is less than 20% by weight, the resulting polyurethane tends to exhibit a poor adhesion-improving effect. When the content of the polycarbonate component is more than 95% by weight, the resulting polyurethane tends to be deteriorated in coatability.

Further, the polyurethane resin used in the present invention suitably has a low glass transition point (hereinafter occasionally referred to merely as "Tg"). Such a polyurethane tends to exhibit a good adhesion property. The Tg is preferably not higher than 10°C. The Tg as used herein means such a temperature at which when measuring a dynamic viscoelasticity of a dried coating film formed of the polyurethane resin, E" becomes maximum.

It is required that the second layer formed in the biaxially stretched polyester film of the present invention comprises, in addition to the above polyurethane comprising the diol component having a polycarbonate structure, a heat-crosslinking agent which serves for promoting a crosslinking reaction of the polyurethane by heating. As the heat-crosslinking agent, there may be used at least one compound selected from the group consisting of methylolated or alkoxymethylolated melamine-based compounds and benzoguanamine-based compounds, urea-based compounds, acrylamide-based compounds, epoxy-based compounds, isocyanate-based compounds, carbodiimide-based compounds, oxazoline-based compounds, silane coupling agent-based compounds and titanium coupling agent-based compounds.

The easy-bonding layer comprising the polyurethane having a low Tg as described above tends to suffer from so-called blocking which is such a phenomenon that front and rear surfaces of an easy-bonding film having the easy-bonding layer are stuck together when the film is wound into a roll. In order to prevent occurrence of the blocking of the film, there is frequently used the method in which a heat-crosslinking agent is used in combination with the polyurethane in the easy-bonding layer. However, in the method of preventing occurrence of blocking by adding a large amount of the heat-crosslinking agent to the easy-bonding layer, the polyurethane resin comprising the diol having a polycarbonate structure as used in the present invention tends to be inhibited from exhibiting the aimed effect of improving the easy-bonding property.

In order to subject the easy-bonding layer to crosslinking while maintaining a good easy-bonding property thereof, the easy-bonding layer may be prevented from exhibiting an excessively high crosslinking density, that is, the use of an excessively large amount of the heat-crosslinking agent may be avoided, or the heat-crosslinking agent having a less content of functional groups may be used. The amount of the functional group as used herein represents an amount of crosslinkable functional groups per a molecular weight of the heat-crosslinking agent. The amount of the functional groups in the heat-crosslinking agent may be determined, for example, by first analyzing an attribution of the structure of the heat-crosslinking agent by ¹³C-NMR and then measuring the ratios of the functional groups by ¹H-NMR to obtain the proportion of the crosslinkable functional groups per a molecular weight of the heat-crosslinking agent. In the case where the crosslinking agent used above comprises a large amount of the functional groups, the crosslinking agent should be used only in a small amount. In the present invention, in particular, when the heat-crosslinking agent comprising the functional groups in an amount of more than 10 mmol/g is used singly, the amount of the heat-crosslinking agent used is preferably not more than 30% by weight and more preferably not more than 15% by weight based on the weight of the easy-bonding layer. The lower limit of the amount of the heat-crosslinking agent used is preferably 3% by weight. On the other hand, the heat-crosslinking agent comprising the functional groups in an amount of less than 10 mmol/g, is preferably used in an amount of 5 to 50% by weight and more preferably 10 to 40% by weight based on the weight of the easy-bonding layer. In particular, the polymer-type heat-crosslinking agents comprise the functional groups only in a small amount and, therefore, tend to be suitably used. In the most preferred embodiment of the present invention, the polymer-type heat-crosslinking agent having an oxazoline group is used together with the polyurethane having a carboxyl group.

As described above, in the present invention, the second layer exhibits not only a good adhesion property to the hard coat layer, the light diffusion layer, etc., but also usually has a sufficient adhesion property to the prism layer which is formed by applying a solvent-free coating material.

The second layer of the film of the present invention preferably comprises fine particles in an amount of not less than 3% by weight based on the total weight of the easy-bonding layer in order to prevent occurrence of blocking of the film. When the content of the fine particles in the second layer is less than 3% by weight, the effect of preventing occurrence of blocking tends to be insufficient. On the other hand, when the content of the fine particles in the second layer is too large, although the effect of presenting occurrence of blocking becomes high, the easy-bonding layer tends to be deteriorated in transparency as well as continuity, so that the resulting coating film tends to be deteriorated in strength or tends to exhibit a poor easy-bonding property. More specifically, the content of the fine particles in the second layer is preferably not more than 15% by weight and more preferably not more than 10% by weight. By using the above method, it is possible to satisfy both of a good easy-bonding property and a good anti-blocking property.

Examples of the fine particles include inorganic particles such as silica, alumina and metal oxides, and organic particles such as crosslinked polymer particles. In particular, from the viewpoints of a good dispersibility in the second layer and a good transparency of the resulting coating film, silica particles are preferred.

When the particle diameter of the fine particles is too small, the effect of preventing occurrence of blocking tends to be hardly attained. When the particle diameter of the fine particles is too large, the fine particles tend to be fallen off from the resulting coating film. The average particle diameter of the fine particles used in the second layer is preferably about 1/2 to about 10 times the thickness of the second layer. Further, since the excessively large particle diameter of the fine particles tends to cause deterioration in transparency of the second layer, the average particle diameter of the fine particles used in the second layer is preferably not more than 200 nm and more preferably not more than 100 nm.

The occupying ratio of the above polyurethane resin in the second layer may be appropriately determined. However, when the amount of the polyurethane resin used therein is too small, the effect of addition of the polyurethane resin tends to be hardly attained. Therefore, the blending ratio of the polyurethane resin in the second layer is controlled such that the lower limit of the blending ratio of the polyurethane resin is preferably not less than 20%, more preferably not less than 40% and still more preferably not less than 50% to obtain a high adhesion property of the second layer.

In addition to the above components, the second layer may also comprise the other components, if required. Examples of the other components include surfactants, other binders, defoaming agents, coatability improvers, thickeners, antioxidants, ultraviolet absorbers, foaming agents, dyes and pigments. These additives may be used alone or in combination of any two or more thereof, if required.

In the present invention, the coating amount of the second layer as measured in terms of a finally dried thickness is preferably in the range of 0.005 to 0.5 g/m² and more preferably 0.01 to 0.3 g/m². When the coating amount of the second layer is less than 0.005 g/m², the second layer tends to be insufficient in adhesion property. On the other hand, when the coating amount of the second layer is more than 0.5 g/m², the effect of enhancing the adhesion property tends to be already saturated, and on the contrary, there rather tend to arise the problems such as occurrence of blocking.

In the present invention, similarly to the first layer, it is required that the second layer is laminated by a so-called in-line coating method in which a coating solution using water as a main medium is applied onto the polyester film, and then the obtained coated polyester film is subjected to stretching in at least one direction thereof, followed by further subjecting the resulting stretched film to heat setting. In this case, for the purposes of enhancing a stability of the coating solution and improving a coatability of the coating solution and properties of the resulting coating film, in addition to water, an organic solvent having a good compatibility with water may be added to the coating solution in an amount of usually not more than 10% by weight. Examples of the organic solvent include those organic solvents as illustrated for the above antistatic easy-bonding layer comprising the cationic polymer.

In the present invention, the above coating layer comprising the cationic polymer is formed on one surface of the polyester film, and the coating layer obtained by applying thee coating agent which comprises the polyurethane comprising the diol component having a polycarbonate structure and the heat-crosslinking agent is formed on the other surface of the polyester film. Any of these coating layers is preferably formed by applying the coating solution using water as a main medium onto the polyester film, and then subjecting the resulting coated polyester film to stretching in at least one direction thereof, followed by subjecting the obtained stretched film to heat setting.
More specifically, there may be used the method in which after applying the aqueous coating solution onto an unstretched film, the thus coated film is stretched in a longitudinal direction and a transverse direction thereof either in a simultaneous manner or in a sequential manner, followed by subjecting the biaxially stretched film to heat setting, the method in which the film is monoaxially stretched in one of the longitudinal and transverse directions thereof and then coated with the coating solution, and further the thus coated monoaxially stretched film is subjected to stretching in the direction perpendicular to the previous stretching direction, followed by subjecting the resulting biaxially stretched film to heat setting, or the method in which the film is biaxially stretched in both the longitudinal and transverse directions thereof and then coated with the coating solution, and further the thus coated biaxially stretched film is subjected again to stretching in either the longitudinal direction, the transverse direction or both the directions, followed by subjecting the thus stretched film to heat setting. In the present invention, after the different kinds of coating solutions are applied onto the front and rear surfaces of the film substantially at the same time, the resulting sheet is stretched in at least one direction, and then subjected to heat setting.

By using the above so-called in-line coating method, the coating layers can be stretched together with the polyester film at the same time, so that not only production of the coating layers in the form of a uniform thin film but also strong adhesion between the respective coating layers and the polyester film can be achieved. In addition, thereafter, the polyester film and the coating layers are simultaneously subjected to heat setting usually at a temperature as high as not lower than 200°C, so that the crosslinking reaction in the coating layers can proceed sufficiently, and the adhesion between the respective coating layers and the polyester film can be further enhanced.

As the method of applying the coating solution onto the polyester film as the base material, there may be used optional conventionally known coating methods. Specific examples of the coating methods include a roll coating method, a gravure coating method, a micro-gravure coating method, a reverse coating method, a bar coating method, a roll brush coating method, a spray coating method, an air knife coating method, an impregnation coating method, a curtain coating method and a die coating method. These coating methods may be used alone or in combination of any two or more thereof.

The optical laminated polyester film of the present invention may be used in the optical applications such as prism sheets and diffusion plates. Therefore, the haze of the film including the above coating layers formed on both the surfaces thereof is preferably not more than 5.0% and more preferably not more than 3.0%. Also, the total light transmittance of the film similarly including the above coating layers formed on both the surfaces thereof is preferably not less than 85% and more preferably not less than 88%.

Next, the process for producing the polyester film of the present invention by a sequential biaxial stretching method is specifically explained. However, the present invention is not particularly limited to the following specific embodiment, and various modifications and changes are possible as long as they satisfy the subject matters of the present invention.

First, the preferred embodiment of the process for producing the polyester used in the present invention is described. In the followings, the embodiment using polyethylene terephthalate as the polyester is explained. However, it should be noted that the production conditions are varied depending upon the polyesters used. According to an ordinary method, terephthalic acid and ethylene glycol are subjected to esterification reaction, or dimethyl terephthalate and ethylene glycol are subjected to transesterification reaction. The resulting reaction product is transported into a polymerization vessel, and then an inside temperature of the polymerization vessel is raised while reducing an inside pressure thereof, and finally the reaction system is heated to 280°C under vacuum to allow the polymerization reaction to proceed, thereby obtaining the aimed polyester.

Next, the polyester chips obtained, for example, by producing the polyester according to the above polymerization method and then drying the resulting polyester by known methods, are fed to a melt-extrusion apparatus to heat the respective polymer to a temperature not lower than a melting point thereof and melt the polymer. Then, the molten polymer is extruded through a die onto a rotary cooling drum on which the polymer is rapidly cooled and solidified such that the temperature of the polymer is dropped to a temperature not higher than a glass transition temperature thereof, thereby obtaining a substantially amorphous unstretched sheet. In this case, in order to improve a surface flatness of the sheet, it is preferable to enhance the adhesion between the sheet and the rotary cooling drum. In the present invention, for the above purpose, there may be suitably adopted an electrostatic pinning method and/or a liquid coating pinning method. In the present invention, the thus obtained sheet is formed into a film by stretching the sheet in a monoaxial direction or biaxial directions. The stretching condition used for production of the biaxially stretched film are specifically described below. The above unstretched sheet is preferably stretched in a longitudinal direction thereof at a temperature of 70 to 140°C at a stretch ratio of 2 to 6 times to obtain a longitudinally monoaxially stretched film, and then the thus obtained monoaxially stretched film is stretched in a transverse direction thereof at a temperature of 80 to 150°C at a stretch ratio of 2 to 6 times. In this case, the longitudinal or transverse stretching may be performed at one stage, or may be performed at two or more stages in which the stretch ratios of the respective steps may be set to the values obtained by suitably dividing the above stretchy ratio. Also, in the above case, the coating of the film may be performed at the time at which the longitudinal stretching is completed. In particular, in the process of the present invention, it is required that both the front and rear surfaces of the film are subjected to the coating step. Both the coating steps for the front and rear surface of the film are thus carried out at the time at which the longitudinal stretching is completed. Next, the thus obtained biaxially stretched film is introduced into a tenter where the film is subjected to heat setting at a temperature of 150 to 250°C and preferably 180 to 240°C for a period of 1 to 600 sec. In this case, in a heat setting maximum temperature zone and/or a heat setting zone having a temperature lower than the maximum temperature, the resulting film is preferably subjected to relaxation by 0.1 to 20% in a longitudinal direction and/or a transverse direction thereof to control a shrinkage rate of the film in a width direction thereof. Further, if required, the obtained film may be further subjected again to longitudinal re-stretching or transverse re-stretching.

### EXAMPLES

The constructions and effects of the present invention are described in more detail below by Examples. However, these Examples are only illustrative and not intended to limit the present invention thereto, and various other modifications and changes are possible unless departing from the subject matters of the present invention. Meanwhile, various properties and characteristics used in Examples and Comparative Examples were measured and defined as follows. In addition, the term "part(s)" used herein means "part(s) by weight" unless otherwise specified.

### (1) Measurement of inherent viscosity of polyester:

One gram of a polyester was accurately weighed, and mixed with and dissolved in 100 mL of a mixed solvent comprising phenol and tetrachloroethane at a weight ratio of 50:50, and a viscosity of the resultant solution was measured at 30°C.

### (2) Average particle diameter (d₅₀: µm) of fine particles used in polyester film:

The particle diameter corresponding to 50% cumulative value (based on weight) in an equivalent sphere distribution of the fine particles as measured by using a centrifugal precipitation type particle size distribution measuring apparatus "SA-CP3 Model" manufactured by Shimadzu Seisakusho Co., Ltd., was determined as an average particle diameter of the fine particles.

### (3) Average particle diameter (nm) of fine particles used in an antistatic easy-bonding layer and an easy-bonding layer:

A dispersion of the fine particles was subjected to measurement of a 50% average particle diameter as a number-average particle diameter of the fine particle using "MICROTRACK UPA" manufactured by Nikkiso Co., Ltd. The thus measured value was determined as a average particle diameter (nm) of the fine particles.

### (4) Surface resistivity value (Ω):

Using a high-resistance meter "HP4339B" and a measuring electrode "HP16008B" both manufactured by Hewlett Packard Japan, Ltd., the surface resistivity value (Ω) of the coating layer after applying a voltage of 100 V thereto for 1 min was measured in an atmosphere of 23°C and 50% RH.

### (5) Film haze (%):

The haze (%) of the film was measured using a haze measuring device "HAZE METER HM-150" manufactured by Murakami Color Research Laboratory Co., Ltd., according to JIS K7136.

### (6) Total light transmittance (%):

The total light transmittance (%) of the film was measured using a haze measuring device "HAZE METER HM-150" manufactured by Murakami Color Research Laboratory Co., Ltd., according to JIS K7361.

### (7) Glass transition temperature Tg (°C) of polyurethane-based coating agent:

A solution or a water dispersion of a polyurethane resin was dried in a petri dish of "Teflon (registered trademark)" so as to form a coating film thereof having thickness of 500 µm after dried. The drying conditions were adjusted such that the solution or water dispersion was dried at room temperature for one week, and then further dried at 120°C for 10 min. The thus obtained coating film was cut into a width of 5 mm, and set to a dynamic viscoelastic analyzer "DVA-200 Model" manufactured by I.T. Keisoku Seigyo Co., Ltd., such that a distance between chucks was 20 mm, and while the temperature therein was raised at a rate of 10°C/min from -100°C to 200°C, the measurement of E" was conducted at a frequency of 10 Hz. The point at which E" reached a maximum value was determined as Tg (°C).

### (8) Formation of prism layer:

A coating solution having the following composition for forming a prism layer was applied onto a surface of an easy-bonding layer of the laminated polyester film as produced, using a die coater such that the coating amount thereof as measured in terms of a thickness of the obtained coating layer was 50 g/m². Thereafter, the resulting coating layer was attached under pressure to a metal mold roll for forming a prism layer on which a reverse shape of prism lenses (pitch: 0.05 mm) was formed, to obtain a molded prism layer, and at the same time, the thus obtained prism layer was irradiated with ultraviolet rays from the side of the laminated film opposed to the prism layer (on the base material side of the film) under the following conditions. That is, the ultraviolet irradiation was carried out using a high-pressure mercury lamp having an irradiation energy of 160 W/cm at an irradiation distance of 150 mm for 30 sec to cure the coating layer, thereby obtaining a cured prism layer.

**<Composition of coating solution for forming prism layer>**

| | |
|---|---|
| 1,9-Nonanediol diacrylate | 80 parts |
| Ethyleneoxide-modified bisphenol A dimethacrylate | 20 parts |
| Ultraviolet reaction initiator ("IRGACURE 184" produced by Ciba Specialty Chemicals, Corp.) | 4 parts |

### (9) Evaluation of adhesion property of prism layer:

The prism layer obtained in the above (8) was subjected to cross-cutting until reaching the surface of the underlying base material film to form cross-cuts (25 squares of 2 mm²) thereon. A 18 mm-wide tape ("Cellotape (registered trademark) CT-18" produced by Nichiban Co., Ltd.) was attached onto the prism layer, and then rapidly peeled off therefrom at a peel angle of 180°. Thereafter, the surface of the laminated film from which the tape was peeled off, was observed to count the number of the cross-cuts peeled (per 25 cross-cuts). The results of the observation were classified into the following ranks (in which A and B are acceptable upon actual use)
A: Number of cross-cuts peeled = 0 (per 25 cross-cuts)
B: 1 ≤ number of cross-cuts peeled < 5 (per 25 cross-cuts)
C: 5 ≤ area of cross-cuts peeled < 10 (per 25 cross-cuts)
D: 10 ≤ area of cross-cuts peeled (per 25 cross-cuts)

### (10) Formation of hard coat layer:

A mixture comprising an acrylic hard coat agent "KAYARAD" produced by Nippon Kayaku Co., Ltd., and an acrylic hard coat agent "SHIKOU" produced by Nippon Synthetic Chemical Industry Co., Ltd., at a mixing ratio of 2:1, was diluted with a mixed solvent of toluene and methyl ethyl ketone. The resulting solution was applied onto the surface of the antistatic easy-bonding layer of the laminated polyester film as produced, by a reverse gravure coating method such that the coating amount of the solution was 3 g/m² after dried and cured. Next, after drying the solution thus applied at 110°C for 1 min to remove the solvent therefrom, the resulting coating layer was cured by irradiating ultraviolet rays thereto using a high-pressure mercury lamp having an output of 120 W/cm at an irradiation distance of 15 cm a line speed of 10 m/min, thereby forming a hard coat layer.

### (11) Adhesion property to hard coat layer:

The hard coat obtained in the above (10) immediately after being cured was subjected to cross-cutting at the intervals of 1 inch in width until reacting the surface of the underlying base material film to form 100 cross-cuts thereon. A 18 mm-wide tape ("Cellotape (registered trademark) CT-18" produced by Nichiban Co., Ltd.) was attached onto the hard coat, and then rapidly peeled off therefrom at a peel angle of 180°. The peel test was performed three times at the same position of the sample. Then, the surface of the hard coat from which the tape was peeled off, was observed to count the number of the cross-cuts peeled (per 100 cross-cuts). The evaluation ratings are as follows (in which A and B are acceptable upon actual use).
A: Number of cross-cuts peeled = 0 (per 100 cross-cuts)
B: 1 ≤ number of cross-cuts peeled < 20 (per 100 cross-cuts)
C: 20 ≤ area of cross-cuts peeled < 40 (per 100 cross-cuts)
D: 40 ≤ area of cross-cuts peeled (per 100 cross-cuts)

### (12) Formation of light diffusion layer:

A coating solution for forming a light diffusion layer having the following composition was applied onto the surface of the antistatic easy-bonding layer of the laminated polyester film as produced, by a reverse gravure coating method such that the coating amount of the solution on one surface of the film was 12 g/m² after dried and cured. Thereafter, the resulting coating layer was dried and cured at 100°C for 2 min, thereby forming a light diffusion layer.

**<Composition of coating solution for forming light diffusion layer>**

| | |
|---|---|
| Acrylic polyol ("ACRYDIC A-807" produced by Dai-Nippon Ink Kagaku Kogyo Co., Ltd.) | 150 parts by weight |
| Isocyanate ("TAKENATE D11N" produced by Takeda Pharmaceutical Co., Ltd.) | 30 parts by weight |
| Methyl ethyl ketone | 200 parts by weight |
| Butyl acetate | 200 parts by weight |
| Acrylic resin fine particles ("MX-1000" produced by Soken Chemical & Engineering Co., Ltd.; average particle diameter: 10 µm) | 40 parts by weight |

### (13) Adhesion property of light diffusion layer:

The light diffusion layer obtained in the above (12) was subjected to cross-cutting until reaching the surface of the underlying base material film to form cross-cuts (25 squares of 2 mm²) thereon. A 18 mm-wide tape ("Cellotape (registered trademark) CT-18" produced by Nichiban Co., Ltd.) was attached onto the light diffusion layer, and then rapidly peeled off therefrom at a peel angle of 180°. Thereafter, the surface of the light diffusion layer from which the tape was peeled off, was observed to count the number of the cross-cuts peeled (per 25 cross-cuts). The results of the observation were classified into the following ranks (in which A and B are acceptable upon practical use).
A: Number of cross-cuts peeled = 0 (per 25 cross-cuts)
B: 1 ≤ number of cross-cuts peeled < 5 (per 25 cross-cuts)
C: 5 s area of cross-cuts peeled < 10 (per 25 cross-cuts)
D: 10 ≤ area of cross-cuts peeled (per 25 cross-cuts)

The polyesters used in the following Examples and Comparative Examples were prepared by the following manner.

### <Process for producing polyester (A)>

A reaction vessel was charged with 100 parts by weight of dimethyl terephthalate and 60 parts by weight of ethylene glycol as starting materials, and further with 0.09 part by weight of magnesium acetate tetrahydrate as a catalyst. After the reaction was initiated by setting a reaction initiation temperature to 150°C, the reaction temperature was gradually raised while distilling off methanol therefrom, and allowed to reach 230°C after 3 hr. After 4 hr, the transesterification reaction was substantially terminated. The obtained reaction mixture was mixed with 0.04 part of ethyl acid phosphate, and then an ethylene glycol solution of germanium oxide was added thereto in an amount of 100 ppm in terms of metallic germanium in the polymer to thereby subject the reaction mixture to polycondensation reaction for 4 hr. That is, in the above reaction, the reaction temperature was gradually raised from 230°C and finally allowed to reach 280°C. On the other hand, the reaction pressure was gradually dropped from normal pressures and finally allowed to reach 0.3 mmHg. After initiation of the reaction, the change in agitation power in the reaction vessel was observed, and the reaction was terminated at the time at which the agitation power reached the value corresponding to an inherent viscosity of 0.65. The resulting polymer was withdrawn from the reaction vessel under application of a nitrogen pressure. As a result, it was confirmed that the thus obtained polyester (A) had an inherent viscosity of 0.65.

### <Process for producing polyester (B)>

The polyester (A) was previously crystallized at 160°C, and then subjected to solid state polymerization in a nitrogen atmosphere at 220°C, thereby obtaining a polyester (B) having an inherent viscosity of 0.75.

### <Process for producing polyester (C)>

The same procedure as defined above in the process for producing the polyester (A) was conducted except that after adding 0.04 part of ethyl acid phosphate, 0.2 part of silica particles having an average particle diameter of 2.2 µm in the form of a dispersion in ethylene glycol, and an ethylene glycol solution of germanium oxide in an amount of 100 ppm in terms of metallic germanium in the polymer, were added to the reaction mixture, and the polycondensation reaction was terminated at the time at which the agitation power reached the value corresponding to an inherent viscosity of 0.65, thereby obtaining a polyester (C). As a result, it was confirmed that the thus obtained polyester (C) had an inherent viscosity of 0.65.

### Examples 1 to 5 and Comparative Examples 1 to 3:

A mixed raw material prepared by mixing the polyesters (B) and (C) at proportions of 90% and 10%, respectively, was used as a raw material for outermost layers (surface layers), and the polyester (A) was used as a raw material for an intermediate layer. The respective raw materials were fed to two extruders and melted therein at 285°C, and then co-extruded on a cooling roll adjusted to 40°C and cooled and solidified thereon to form a 2-kinds/3-layers (surface layer/intermediate layer/surface layer) structure, thereby obtaining an unstretched sheet. Next, using a difference in rotation speed between rolls, the unstretched sheet was stretched in a longitudinal direction thereof at a stretch ratio of 3.3 times at a film temperature of 85°C. Both the surfaces of the thus longitudinally stretched film were coated with an aqueous coating solution for an antistatic easy-bonding layer and an aqueous coating solution for an easy-bonding layer, respectively, by a bar coating method. Thereafter, the thus coated stretched film was introduced into a tenter in which the film was subjected to drying and preheating at 120°C and then stretched in a width direction thereof at stretch ratio of 3.8 times, and further subjected to heat setting at 220°C and then to 4% relaxation in a cooling zone thereof at 180°C in the width direction, thereby obtaining a laminated polyester film provided on front and rear surfaces thereof with respective coating layers having different compositions from each other, which had a thickness of 188 µm (surface layers: 5 µm for each; intermediate layer: 178 µm). The compositions of solid components of the antistatic easy-bonding layer (first layer) and the easy-bonding layer (second layer) in the respective films, the coating amount of each of the finally produced coating films, and the total light transmittance of each of the polyester films comprising these coating layers, are shown below in Table 1.

Next, the surface of the first layer of each of the films 1 to 8 was coated with the hard coat layer. Then, the surface of the second layer of each film opposed to the hard coat layer was coated with the prism layer. Then, the front and rear surfaces of the film obtained after coating the prism layer, were overlapped with EVA sheets (thickness: about 50 µm) such that the film was sandwiched between the EVA sheets. The resulting laminate was compression-bonded together by using nip rolls such that the EVA sheets were attached to both the hard coat layer and the prism layer, respectively.

The laminated polyester films obtained in Examples 1 to 5 which satisfied the requirements of the present invention, exhibited a good adhesion to the hard coat layer and the prism layer. Further, these films had a good transparency, and were substantially free from occurrence of electrostatic charge when peeling off the EVA sheets attached for protection of the film therefrom owing to low surface resistivity of the hard coat layer formed on the first layer. On the contrary, the film of Comparative Example 1 in which no cationic polymer was incorporated in the first layer, failed to exhibit an antistatic property. In the film of Comparative Example 2 in which no polycarbonate polyurethane was incorporated in the second layer, the adhesion of the second layer to the prism layer was insufficient. In the film of Comparative Example 3 in which no heat-crosslinking agent was incorporated in the second layer, the adhesion of the second layer to the prism layer was insufficient.

### Examples 6 and 7 and Comparative Example 4:

The surface of the first layer of each of the films 1 to 3 obtained in Examples 1 and 2 and Comparative Example 1, respectively, was coated with the light diffusion layer. Next, the surface of the second layer of each film opposed to the light diffusion layer was coated with the prism layer. Then, the front and rear surfaces of the film obtained after coating the prism layer, were overlapped with EVA sheets (thickness: about 50 µm) such that the film was sandwiched between the EVA sheets. The resulting laminate was compression-bonded together by using nip rolls such that the EVA sheets were attached to both the hard coat layer and the prism layer, respectively.

The laminated polyester films obtained in Examples 6 and 7 which satisfied the requirements of the present invention, exhibited a good adhesion between the light diffusion layer and between the prism layer. Further, these films had a good transparency, and were substantially free from occurrence of electrostatic charge when peeling off the EVA sheets attached for protection of the film therefrom owing to low surface resistivity of the hard coat layer formed on the first layer. On the contrary, the film of Comparative Example 4 in which no cationic polymer was incorporated in the first layer, failed to exhibit an antistatic property.

**Table 1**

| Films | Composition of first layer (%) | Final coating amount of first layer (g/m²) | |
|---|---|---|---|
| 1 | a1/b/c1/d1/e = 27/45/20/3/5 | 0.08 | |
| 2 | a2/b/c1/d1 =32/45/20/3 | 0.08 | |
| 3 | b/c1/d1 =77/20/3 | 0.08 | |
| 4 | a1/b/c1/d1/e = 27/45/20/3/5 | 0.08 | |
| 5 | a1/b/c1/d1/e = 27/45/20/3/5 | 0.08 | |
| 6 | a1/b/c1/d1/e = 27/45/20/3/5 | 0.08 | |
| 7 | a1/b/c1/d1/e = 27/45/20/3/5 | 0.08 | |
| 8 | a1/b/c1/d1/e = 27/45/20/3/5 | 0.08 | |

| Films | Composition of second layer (%) | Final coating amount of second layer (g/m²) | Total light transmittance of film (%) |
|---|---|---|---|
| 1 | u1/c2/d2 = 65/29/6 | 0.03 | 92.0 |
| 2 | u1/c2/d2 = 65/29/6 | 0.03 | 92.0 |
| 3 | u1/c2/d2 = 65/29/6 | 0.03 | 92.0 |
| 4 | u2/c2/d2 = 65/29/6 | 0.03 | 92.0 |
| 5 | u3/c2/d2 = 65/29/6 | 0.03 | 92.0 |
| 6 | u1/c1/d2 = 84/10/6 | 0.03 | 92.0 |
| 7 | u1/c3/d2 = 84/10/6 | 0.03 | 92.0 |
| 8 | u2/d2 = 94/6 | 0.03 | 92.0 |

In Table 1, the compounds constituting the respective coating layers are as follows.

### <First layer>

### ·Cationic polymer: (a1)

Quaternary ammonium salt-containing cationic polymer using a diallyl dimethyl ammonium chloride (pyrrolidinium ring-containing polymer of the formula (1)); average molecular weight: about 30000

### ·Cationic polymer: (a2)

Homopolymer of poly(trimethyl ammonium ethyl methacrylate) monomethyl sulfuric cid salt (cationic polymer of the formula (V))

### ·Binder polymer: (b)

Aqueous acrylic resin ("NIKAZOL" produced by Nippon Carbide Industries Co., Inc.; acid value: 6 mgKOH)

### ·Crosslinking agent: (c1)

Methoxymethylol melamine ("BECKAMINE J101" produced by Dai-Nippon Ink Kagaku Kogyo Co., Ltd.)

### ·Fine particles: (d1)

Colloidal silica fine particles (average particle diameter: 0.015 µm)

### ·Additive: (e)

Adduct of polyethyleneoxide to a skeleton of diglycerol (average molecular weight: 450)

### <Second layer>

### ·Polycarbonate polyurethane: (u1)

Water dispersion of a polyurethane resin having Tg of 7°C which was obtained by neutralizing a prepolymer produced from 320 parts of poly(1,6-hexanediol carbonate) having a number-average molecular weight of 800 and comprising OH groups on both terminal ends thereof, 505.7 parts of hydrogenated diphenylmethane diisocyanate and 148.6 parts of dimethylolbutanoic acid with triethylamine, and then subjecting the neutralized product to chain extension reaction using isophorone diamine.

### ·Polycarbonate polyurethane: (u2)

Water-dispersed type polycarbonate polyurethane resin "RU-40-350" comprising a carboxyl group and having Tg of - 20°C (produced by Stahl Inc.)

### ·Polyester polyurethane: (u3)

Polyester polyurethane ("HYDRAN AP-40F" produced by Dai-Nippon Ink Kagaku Kogyo Co., Ltd.); Tg: 48°C

### ·Crosslinking agent: (c1)

Methoxymethylol melamine ("BECKAMINE J101" produced by Dai-Nippon Ink Kagaku Kogyo Co., Ltd.); content of functional group (methoxymethylol group): 18 mmol/g

### ·Crosslinking agent: (c2)

Polymer-type crosslinking agent "EPOCROSS WS-500" (produced by Nippon Shokubai Co., Ltd.) in which an oxazoline group is bonded as a branched chain to an acrylic resin; content of oxazoline group: 4.5 mmol/g.

### ·Crosslinking agent: (c3)

Aqueous solution of polyglycerol polyglycidyl ether "DENACOL EX-521" (produced by Nagase Chemtex Co., Ltd.); epoxy content: 5.3 mmol/g.

### ·Fine particles: (d2)

Colloidal silica fine particles (average particle diameter: 0.07 µm)

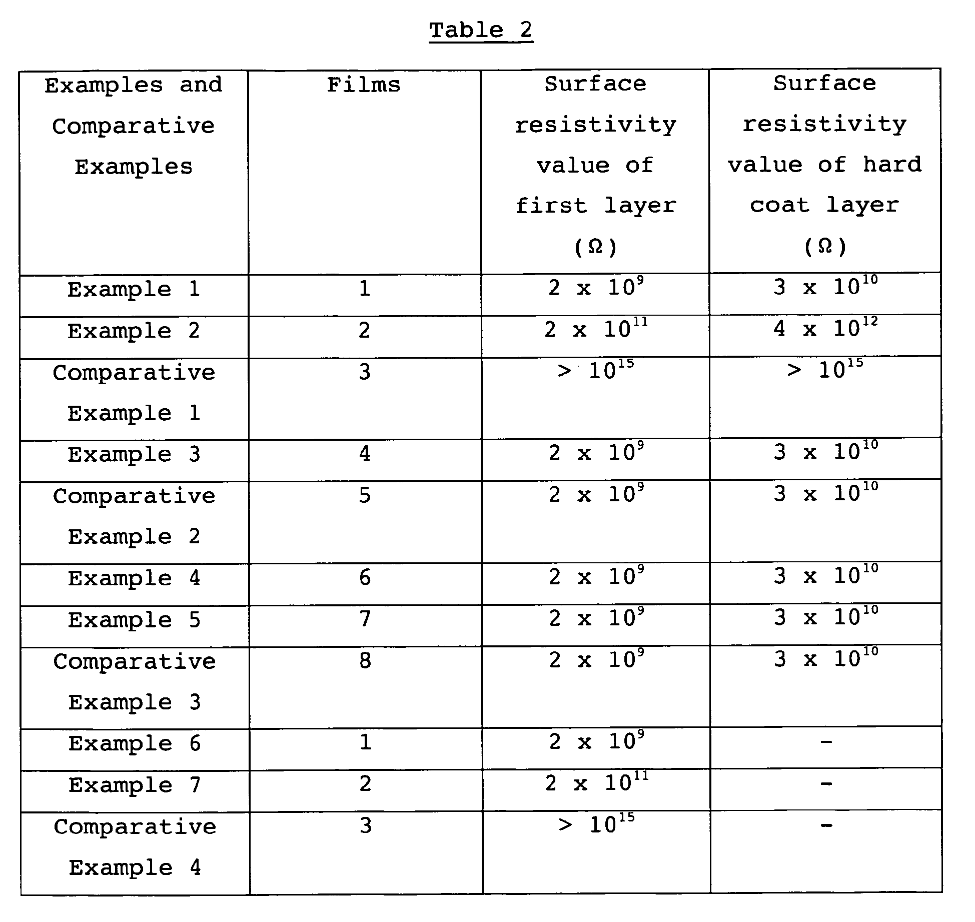

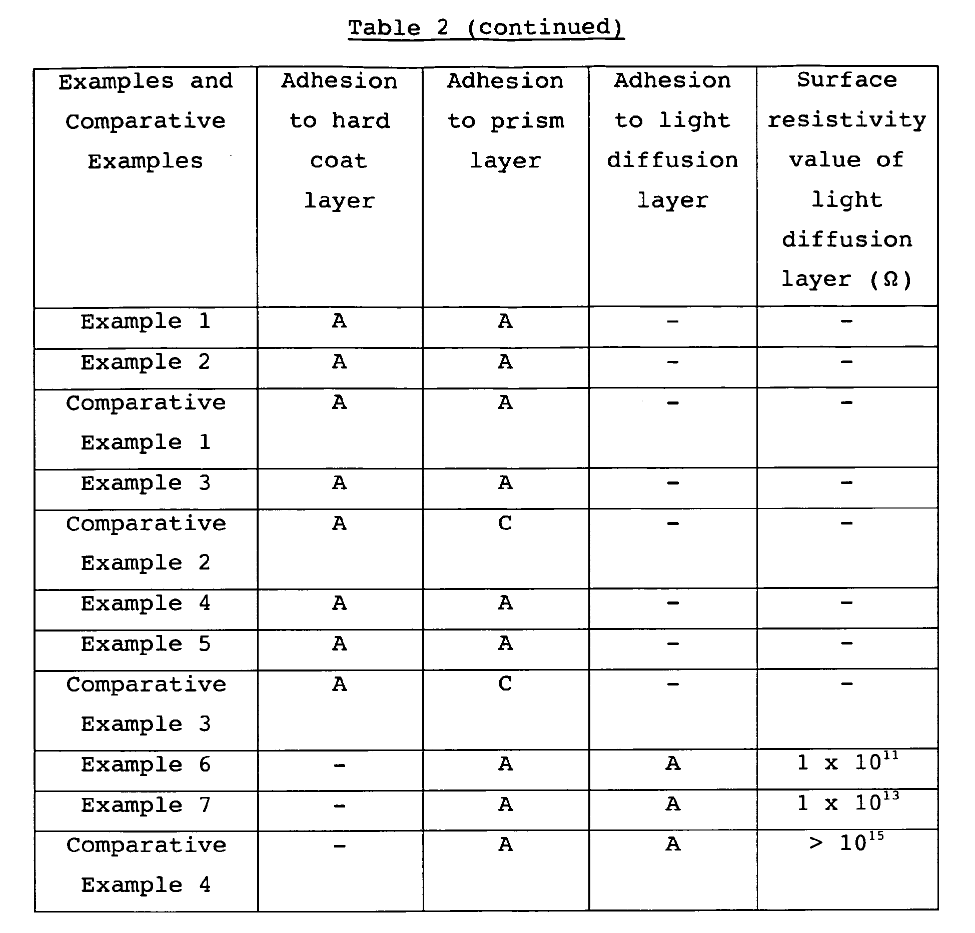

### INDUSTRIAL APPLICABILITY

The film of the present invention can be suitably used, for example, in the applications of liquid crystal displays.

## Claims

1. An optical biaxially oriented polyester film comprising a polyester film, a coating layer comprising a cationic polymer which is formed on one surface of the polyester film, and a layer formed on the other surface of the polyester film which is obtained by applying thereonto a coating agent comprising a polyurethane comprising a diol component having a polycarbonate structure, and a heat-crosslinking agent.
